Europäisches Patentamt

European Patent Office

Office européen des brevets

(19)

(11) **EP 0 886 148 B1**

(12) **FASCICULE DE BREVET EUROPEEN**

(45) Date de publication et mention
de la délivrance du brevet:
**28.12.2005 Bulletin 2005/52**

(51) Int Cl.⁷: **G01S 5/14**

(21) Numéro de dépôt: **98401470.4**

(22) Date de dépôt: **16.06.1998**

(54) **Procédés et systèmes de localisation radiosatellitaire en temps réel, notamment de type GPS**

Verfahren und System zur Echtzeit-Positionsbestimmung mittels Funksatelliten, insbesondere GPS-Satelliten

Method and system for real time position determination using satellites, notably of the GPS type

(84) Etats contractants désignés:
**BE DE GB NL**

(30) Priorité: **17.06.1997 FR 9707488**

(43) Date de publication de la demande:
**23.12.1998 Bulletin 1998/52**

(73) Titulaire: **Thales Navigation S.A.**
**44474 Carquefou (FR)**

(72) Inventeur: **Gounon, René**
**44690 Château Thebaud (FR)**

(74) Mandataire: **Guérin, Michel**
**Marks & Clerk France**
**31-33 Avenue Aristide Briand**
**94117 Arcueil Cédex (FR)**

(56) Documents cités:
WO-A-87/06713          FR-A- 2 715 230
US-A- 4 812 991         US-A- 5 359 332

• HOFFMANN-WELLENHOF ET AL: "Global Positioning System, Theory and Practice" 1994 , SPRINGER-VERLAG , WIEN NEW YORK XP002060239 * page 101, ligne 1 - page 108, ligne 28 *

## Description

La présente invention est relative à la localisation radiosatellitaire en temps réel d'un point à la surface du globe.

Le procédé et le système proposés par l'invention trouvent avantageusement application dans toutes les techniques nécessitant la connaissance de la position d'un mobile à la surface du globe, en trois dimensions, avec une précision centimétrique. Citons par exemple : la géodésie, la topographie, la sismique, l'hydrographie, la robotique...

Pour une présentation générale des techniques de localisation radiosatellitaire et notamment des techniques GPS (Global Positionning System), on pourra avantageusement se référer à l'introduction du brevet français de la Demanderesse publié sous le No. 2 715 230.

On rappelle que le système GPS émet sur deux fréquences généralement baptisées L1 et L2.

La demanderesse avait proposé dans le brevet précité une technique de localisation radiosatellitaire permettant à un opérateur de réaliser des acquisitions avec une précision centimétrique, sans qu'il soit nécessaire pour lui d'effectuer préalablement au déroulement de son relevé cinématique une initialisation par une détermination statique, ni de revenir sur des points de calage, en cas de pertes des signaux satellitaires.

Les algorithmes principalement décrits correspondaient à l'exploitation par le système de la seule fréquence L1. La phase d'initialisation incorporait un processus de convergence rapide - éventuellement mis en oeuvre alors que l'opérateur et son antenne de réception se déplaçaient - qui permettait de démarrer le suivi cinématique au bout d'une durée de l'ordre de 3 à 10 minutes. Les durées de 3 à 10 minutes indiquées dans le brevet précité correspondent donc à un fonctionnement en monofréquence.

L'invention décrite ici propose quant à elle une extension de ce principe qui, en utilisant de façon complètement originale les deux fréquences du système, permet de réduire à quelques secondes les temps d'initialisation, notamment, mais non limitativement, lorsque l'on met en oeuvre un algorithme de convergence du même type que celui décrit dans le brevet précité.

On rappelle que les fréquences d'émission L1, L2 des satellites de la constellation GPS (NAVSTAR) sont respectivement égales à 1,575.42 GHz et 1,227.60 GHz et correspondent à des longueurs d'onde de 19 cm et de 24,4 cm.

Pour faciliter la recherche des ambiguïtés, il est classiquement proposé d'utiliser, non pas directement les mesures de phases effectuées aux fréquences L1 et L2, mais une combinaison linéaire de ces mesures correspondant à la fréquence L3 = L1 - L2 (technique baptisée "Wide-Laning" selon la terminologie anglo-saxonne et bien connue de l'Homme du Métier). Cette technique offre l'avantage d'une ambiguïté beaucoup plus large (86 cm contre 19 cm pour L1), mais au détriment d'une augmentation du bruit dans un rapport encore plus important (1,9 cm en supposant un bruit de 0,3 cm sur les mesures de L1 et L2).

L'invention propose d'utiliser des combinaisons linéaires des fréquences de base L1 et L2 donnant des ambiguïtés encore beaucoup plus larges, avec un traitement permettant de compenser les bruits très élevés engendrés par ces combinaisons.

L'invention propose donc un procédé pour la localisation de points à la surface de la terre dans lequel on capte simultanément en une station de référence de coordonnées connues et sur un mobile que l'on déplace sur les points à localiser, des signaux radiofréquences émis sur deux fréquences (L1 et L2) en direction de la terre par une constellation de satellites, et on met en oeuvre un traitement d'initialisation par lequel on lève l'ambiguïté de la phase sur les signaux en provenance des différents satellites observés, ainsi qu'un traitement cinématique permettant, à l'issue du traitement d'initialisation, de suivre les tours de phase des signaux pendant que le mobile se déplace, caractérisé en ce que le traitement d'initialisation met en oeuvre une détermination de coordonnées de points à partir de mesures de phases, réalisées sur de combinaisons linéaires des fréquences d'émission correspondant à deux fréquences apparentes de longueurs d'onde plus importantes que celles des fréquences d'émission (L1 et L2) de la constellation de satellites et en ce qu'on combine linéairement les positions issues des levés d'ambiguïtés réalisées à chacune de ces deux fréquences apparentes de façon que leurs bruits s'annulent.

Comme on l'aura compris, on réalise ainsi des levés d'ambiguïtés sur des signaux dont les fréquences correspondent à de grandes longueurs d'onde, mais les effets du bruit à ces fréquences sont atténués, de sorte que l'on dispose d'une détermination fiable.

Dans l'application du principe général au système GPS, les combinaisons de phase correspondent préférentiellement aux fréquences L4 = 4L2-3L1 et L5 = 4L1 - 5L2.

Les bruits engendrés par ces combinaisons sont de signe opposé et dans le rapport 1,43, de telle sorte qu'ils se trouvent compensés par les combinaisons linéaires suivantes :

$$X = (1,43 \ XL4 + XL5)/2,43$$

$$Y = (1,43 \ YL4 + YL5)/2,43$$

$$Z = (1,43 \ ZL4 + ZL5)/2,43$$

où XL4, YL4, ZL4 et XL5, YL5, ZL5 sont les coordonnées déterminées pour ce point à partir des mesures de phase aux fréquences L4 et L5.

Par ailleurs, on améliore considérablement la validation du résultat final en effectuant une comparaison entre, d'une part l'évolution des phases mesurées entre un instant $t_0$ correspondant au début du traitement et l'instant $t_1$ courant, et d'autre part l'évolution des distances Mobile-Satellites calculées entre ces mêmes instants depuis le point à valider. Par rapport au test d'évolution des résidus décrit dans FR 2 715 230, ce test présente l'avantage de se faire sur la totalité de la mesure de phase et non seulement sur sa partie fractionnaire. Il en résulte une augmentation très importante de la sensibilité et donc de la fiabilité.

Par ailleurs encore, pour exploiter complètement les possibilités offertes par l'utilisation des deux fréquences L1 et L2, on met en oeuvre un traitement de correction du retard ionosphérique. Ce traitement s'applique dans toutes les phases du calcul : initialisation et cinématique. De manière générale, on exploite le fait que les retards ionosphériques observés sur les deux fréquences L1 et L2 sont inversement proportionnels au carré des fréquences. De la sorte, on compense l'effet de ce retard en appliquant aux positions calculées les relations suivantes :

$$X = (1,65XL1-XL2)/0,65$$

$$Y = (1,65YL1-YL2)/0,65$$

$$Z = (1,65ZL1-ZL2)/0,65.$$

où XL1, YL1, ZL1 et XL2, YL2, ZL2 sont les coordonnées calculées à partir des mesures de phase réalisées aux fréquences L1 et L2.

Le même principe est applicable au calcul des résidus.

L'originalité de ce calcul est qu'il s'applique sur les résultats, et non sur les mesures.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique d'un système conforme à un mode de réalisation de l'invention ;
- la figure 2 est une représentation par schéma bloc du traitement que réalise le procédé conforme à un mode de mise en oeuvre possible de l'invention.

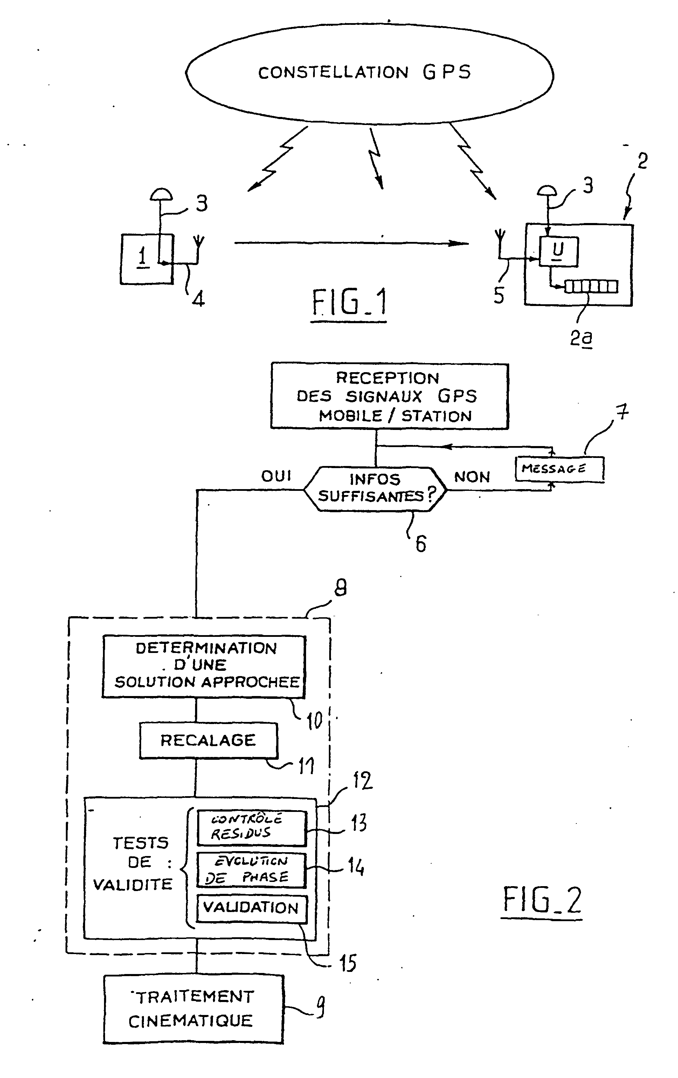

Le système de localisation qui a été représenté sur la figure 1 comporte principalement une station fixe 1 placée en un point de coordonnées connues et un mobile 2 qu'un opérateur déplace sur les points que l'on veut localiser. La station 1 et le mobile 2 sont chacun munis de moyens 3 pour la réception des signaux émis par les satellites GPS de la constellation NAVSTAR. Ces moyens 3 sont classiquement connus de l'Homme du Métier et comportent notamment une antenne de réception GPS, ainsi que des moyens pour la démodulation du signal.

La station de base 1 comporte également des moyens 4 pour émettre en radiofréquence des informations destinées au mobile 2.

Le mobile 2 est pourvu de moyens récepteurs 5 pour la réception des informations envoyées par les moyens d'émission 4 de la station 1.

Les moyens de réception 3 de la station 1 et du mobile 2 relèvent la phase de la porteuse des signaux reçus en provenance de chaque satellite observé. Les données ainsi reçues par la station 1 sont transmises au mobile 2 par les moyens d'émission 4.

La station de base 1 n'effectue aucun calcul et se contente de retransmettre les signaux qu'elle reçoit au mobile 2.

Les différences de phase entre, d'une part, les signaux reçus à la station de base 1 et, d'autre part, les signaux reçus au mobile 2, sont traitées, ainsi que cela va maintenant être décrit par une unité U que présente le mobile 2, de façon à lever les ambiguïtés de phase et à ainsi déterminer la position du mobile 2, connaissant la position de la station de base 1 ainsi que les éphémérides des satellites observés.

Le mobile 2 présente des moyens d'affichage 2a auxquels les coordonnées calculées sont transmises. Il comporte également des moyens pour la mémorisation de ces coordonnées ainsi qu'un clavier (non représenté) permettant à l'opérateur, lorsque l'antenne a été placée sur un point à repérer, de commander le stockage en mémoire des coordonnées calculées affichées.

Le traitement que réalise l'unité U se déroule selon l'organigramme représenté sur la figure 2.

Dans une première étape (étape 6), l'unité U vérifie la qualité des signaux radiosatellitaires reçus.

Lorsque les informations ne sont pas suffisantes, un message 7 est affiché sur les moyens 2a du mobile 2.

Si par contre les informations sont suffisantes, l'unité U met en oeuvre un traitement d'initialisation rapide 8, puis un traitement de suivi cinématique 9.

Le traitement 8 comporte trois étapes principales consistant :

- en la détermination d'une position inambiguë approchée (étape 10) ;
- en un traitement de recalage sur une position précise (étape 11) ;
- en des tests de validité (étape 12).

Dans l'étape 10, on met en oeuvre un traitement de détermination d'une position approchée inambiguë, en combinant l'utilisation de triples différences de phase aux fréquences L1 et L2 et celle des pseudo-distances extraites des mesures faites sur les codes "P", bien connus de l'Homme du Métier. Cette étape corrige les résultats de l'effet de la correction ionosphérique selon le procédé décrit ci-dessus.

Dans l'étape 11, on met en oeuvre le processus de recalage par convergence rapide correspondant aux traitements décrits dans le brevet de la Demanderesse FR-2-715-230, auquel on pourra avantageusement se reporter.

Toutefois le processus est d'abord mis en oeuvre, non plus sur la fréquence L1 comme décrit dans le brevet précité, mais en utilisant des combinaisons linéaires des fréquences L1 et L2 donnant deux fréquences apparentes L4 et L5 de longueur d'ondes beaucoup plus grandes. Les combinaisons linéaires choisies, 4L2 - 3L1 et 4L1 - 5L2, correspondent à des longueurs d'onde de 1,64 m pour L4 et 1,83 m pour L5, qui engendrent une amplification des bruits de 12,9 cm sur L4, 18,5 cm sur L5, avec une hypothèse de 3 mm sur L1 et 4 mm sur L2. Au lieu d'utiliser directement les résultats de positions L4 et L5 entachées de ces bruits très élevés, on utilise une combinaison linéaire spécifique qui permet de réduire à peu près complètement le bruit.

Avec les valeurs précitées pour L4 et L5, les bruits engendrés sur les mesures de phase sur L4 et sur L5 sont de signes contraires, et dans le rapport 1,43.

Si l'on appelle XL4, YL4, ZL4 et XL5, YL5, ZL5 les coordonnées des points déterminés sur les mesures de phase sur L4 et L5, un point résultant non biaisé est donné par-:

$$X = (1,43 \ XL4 + XL5)/2,43$$

$$Y = (1,43 \ YL4 + YL5)/2,43$$

$$Z = (1,43 \ ZL4 + ZL5)/2,43$$

Le traitement qui vient d'être décrit permet d'initialiser la position calculée pour le mobile en un temps très rapide (de quelques secondes à dizaines de secondes pour une fiabilité de 99,9 %).

Les valeurs données précédemment pour les fréquences L4 et L5 sont des valeurs adaptées pour le système GPS, toutefois d'autres valeurs peuvent bien entendu être envisagées.

A la fin de cette phase d'initialisation, on détermine un point recalé en mettant en oeuvre la technique de correction de l'effet des erreurs ionosphériques.

On sait en effet que le retard ionosphérique est inversement proportionnel au carré de la fréquence de travail.

Il en résulte que les retards ionosphériques entre deux fréquences sont liés dans un rapport donné, qui est par exemple de 1,65 pour les retards entre L2 et L1.

Aux grandes distances (c'est-à-dire supérieures à 10 km), c'est en général le retard ionosphérique qui est la cause principale de l'erreur.

Lorsque c'est le cas, l'observation des erreurs résiduelles des calculs réalisés à deux fréquences, une fois levées les ambiguïtés sur ces deux fréquences, montre une proportionnalité des écarts. Par exemple

$$\delta XL2 = 1,65.\delta XL1$$

$$\delta YL2 = 1,65.\delta YL1$$

$$\delta ZL2 = 1,65.\delta ZL1$$

En outre, les résidus observés sur chaque satellite sont dans le même rapport. Du fait de la non-correction des erreurs ionosphériques en amont, ces résidus peuvent être élevés, au point de perturber les tests de cohérence. Mais lorsque les résidus sont élevés du fait du retard ionosphérique, le résidu composite

$$Res = (,65*ResL1-ResL2)/0,65$$

où ResL1 et ResL2 sont respectivement les résidus sur L1 et L2, est effectivement nul.

Les tests de résidus de l'étape 15 ou mis en oeuvre lors des déterminations cinématiques sont par conséquent préférentiellement mis en oeuvre avec de tels résidus composites, qui sont exploitables pour les tests de cohérence des lignes de position, même lors de fortes perturbations ionosphériques. La mise en oeuvre de cette technique permet l'exploitation du système à des distances bien supérieures aux 10 km habituellement considérés comme une limite maximum.

A l'issue de la détermination des points approchés, puis recalés par les traitements des étapes 10 et 11, on met en oeuvre dans l'étape 12 des tests de validité, et notamment un test 13 de contrôle des résidus (également appelé test de cohérence) semblable à celui décrit dans FR 2 715 230, ainsi qu'un test 14 sur l'évolution comparée des mesures et des distances calculées depuis la position à valider.

Dans ce test 14, on met en oeuvre une comparaison entre d'une part l'évolution des phases mesurées en un instant t0 correspondant au début de traitement et un instant t1 courant et d'autre part l'évolution des distances théoriques mobiles-satellites entre ces mêmes instants.

L'identité entre les deux évolutions n'est en effet vérifiée qu'au point vrai.

Ainsi, le test de validité prend en compte non seulement les parties fractionnaires des phases d'émission mais également leur nombre de tours, ce qui le rend beaucoup plus sensible et permet en outre de détecter les sauts de tours qui auraient pu intervenir sur l'une ou l'autre des distances mesurées entre l'instant initial et l'instant courant.

Lors de la phase cinématique (étape 9), on calcule un point à l'aide des seules fréquences L1 et L2.

Les tests de validation de la position du suivi cinématique reprenant, à chaque pas de calcul, ceux de l'étape 12 pour ce qui concerne les tests sur les contrôles des résidus et les tests de contrôle d'évolution de phase.

Egalement, dans cette phase cinématique, la détermination des coordonnées de position faites sur L1 et L2 est obtenue en calculant les coordonnées X, Y, Z à partir des relations :

$$X = (1,65 \text{ XL1-XL2})/0,65$$

$$Y = (1,65\text{YL1-YL2})/0,65$$

$$Z = (1,65\text{ZL1-ZL2})/0,65$$

tenant ainsi compte de l'effet des erreurs ionosphériques. Dans ces expressions XL1, YL1, ZL1 et XL2, YL2, ZL2 sont les coordonnées déterminées sur les mesures de phase observées sur L1 et L2.

## Revendications

**1.** Procédé pour la localisation de points à la surface de la terre dans lequel on capte simultanément en une station de référence de coordonnées connues et·sur un mobile que l'on déplace sur les points à localiser, des signaux radiofréquences émis sur deux fréquences en direction de la terre par une constellation de satellites, et on met en oeuvre un traitement d'initialisation par lequel on lève l'ambiguïté de la phase sur les signaux en provenance des différents satellites observés, ainsi qu'un traitement cinématique permettant, à l'issue du traitement d'initialisation, de suivre les tours de phase des signaux pendant que le mobile se déplace, **caractérisé en ce que** le traitement d'initialisation met en oeuvre une détermination de coordonnées de points à partir de mesures de phases, réalisées sur des combinaisons linéaires des fréquences d'émission correspondant à deux fréquences apparentes de longueurs d'onde plus importantes que celles des fréquences d'émission de la constellation de satellites et **en ce qu'**on combine linéairement les positions issues des levés d'ambiguïtés réalisées à chacune de ces deux fréquences apparentes de façon que leurs bruits s'annulent.

**2.** Procédé de radiolocalisation GPS selon la revendication 1, **caractérisé en ce que** les mesures de phase sont réalisées aux fréquences L4=4L2-3L1 et L5=4L1-5L2, où L1 et L2 sont les deux fréquences d'émission GPS, et **en ce qu'**on calcule les coordonnées non bruitées X, Y, Z d'un point par :

$$X = (1,43 \text{ XL4 +XL5})/2,43$$

$$Y = (1,43 \text{ YL4 +YL5})/2,43$$

$$Z = (1,43 \text{ ZL4 +ZL5})/2,43$$

où XL4, YL4, ZL4 et XL5, YL5, ZL5 sont les coordonnées déterminées pour ce point à partir des mesures de phase aux fréquences L4 et L5.

**3.** Procédé selon l'une des revendications précédentes, **caractérisé en ce que** lors du traitement d'initialisation ou lors du traitement cinématique, on met en oeuvre un test de validité de la position qui réalise une comparaison entre d'une part l'évolution des phases mesurées entre un instant t0 correspondant au début du traitement et l'instant t1 courant et d'autre part l'évolution des distances théoriques mobiles-satellites calculées entre ces mêmes instants depuis le point à valider.

**4.** Procédé selon l'une des revendications précédentes, **caractérisé en ce que** lors du traitement d'initialisation et lors du traitement cinématique, on met en oeuvre un traitement de correction du retard ionosphérique appliqué sur les positions calculées.

**5.** Procédé selon la revendication 4, **caractérisé en ce qu'**on calcule des résidus ResLi, ResLj sur des mesures de phases à deux fréquences Li et Lj et **en ce qu'**on calcule également un résidu composite :

$$Res = (\lambda*\text{ResLi-ResLj})/(\lambda-1)$$

où $\lambda$ est le rapport des retards ionosphériques entre les fréquences Lj et Li.

**6.** Procédé selon la revendication 4, **caractérisé en ce que** lors du suivi cinématique, on détermine les coordonnées X, Y, Z d'un point en calculant :

$$X = (1,65\text{XL1-XL2})/0,65$$

$$Y = (1,65\text{YL1-YL2})/0,65$$

$$Z = (1{,}65ZL1\text{-}ZL2)/0{,}65.$$

où XL1, YL1, ZL1 et XL2, YL2, ZL2 sont les coordonnées correspondant aux mesures de phase réalisées aux fréquences L1 et L2.

**Patentansprüche**

1. Verfahren zur Ortung von Punkten an der Erdoberfläche, bei dem gleichzeitig in einer Bezugsstation mit bekannten Koordinaten und in einer Mobilstation, die über die zu ortenden Punkte bewegt wird, Funkfrequenzsignale augefangen werden, die von einer Satellitenkonstellation auf zwei Frequenzen zur Erde gesendet werden, und bei dem eine Initialisierungsverarbeitung, durch die die Phasenmehrdeutigkeit bei den von den verschiedenen beobachteten Satelliten kommenden Signalen aufgehoben wird, sowie eine kinematische Verarbeitung durchgeführt wird, die es nach der Initialisierungsverarbeitung ermöglicht, den Phasendrehungen der Signale während der Bewegung der Mobilstation zu folgen, **dadurch gekennzeichnet, dass** die Initialisierungsverarbeitung eine Bestimmung der Punktkoordinaten ausgehend von Phasenmessungen verwendet, die an linearen Kombinationen der Sendefrequenzen durchgeführt werden, die zwei sichtbaren Frequenzen mit größeren Wellenlängen als diejenigen der Sendefrequenzen der Satellitenkonstellation entsprechen, und dass die aus den Mehrdeutigkeits-Aufhebungen, die an jeder dieser beiden sichtbaren Frequenzen durchgeführt wurden, stammenden Positionen linear kombiniert werden, damit ihr Rauschen sich annulliert.

2. GPS-Funkortungsverfahren nach Anspruch 1, **dadurch gekennzeichnet, dass** die Phasenmessungen auf den Frequenzen L4=4L2-3L1 und L5=4L1-5L2 durchgeführt werden, wobei L1 und L2 die beiden GPS-Sendefrequenzen sind, und dass die nicht verrauschten Koordinaten X, Y, Z eines Punkts folgendermaßen berechnet werden:

$$X = (1{,}43\ XL4 + XL5)/2{,}43$$

$$Y = (1{,}43\ YL4 + YL5)/2{,}43$$

$$Z = (1{,}43\ ZL4 + ZL5)/2{,}43$$

wobei XL4, YL4, ZL4 und XL5, YL5, ZL5 die für diesen Punkt ausgehend von Phasenmessungen auf den Frequenzen L4 und L5 bestimmten Koordinaten sind.

3. Verfahren nach einem der vorhergehenden Ansprüche, **dadurch gekennzeichnet, dass** bei der Initialisierungsverarbeitung oder bei der kinematischen Verarbeitung ein Validitätsstest der Position durchgeführt wird, der einen Vergleich zwischen einerseits der Entwicklung der gemessenen Phasen zwischen einem Zeitpunkt t0 entsprechend dem Beginn der Verarbeitung und dem laufenden Zeitpunkt t1 und andererseits der Entwicklung der theoretischen Entfernungen zwischen Mobilstationen und Satelliten durchführt, die zwischen diesen gleichen Zeitpunkten vom zu validierenden Punkt aus berechnet werden.

4. Verfahren nach einem der vorhergehenden Ansprüche, **dadurch gekennzeichnet, dass** bei der Initialisierungsverarbeitung und bei der kinematischen Verarbeitung eine Korrekturverarbeitung der ionosphärischen Verzögerung durchgeführt wird, die an die berechneten Positionen angewendet wird.

5. Verfahren nach Anspruch 4, **dadurch gekennzeichnet, dass** Restwerte ResLi, ResLj von Phasenmessungen auf zwei Frequenzen Li und Lj berechnet werden, und dass ebenfalls ein Verbund-Restwert

$$Res = (\lambda*ResLi\text{-}ResLj)/(\lambda\text{-}1)$$

berechnet wird, wobei $\lambda$ das Verhältnis der ionosphärischen Verzögerungen zwischen den Frequenzen Lj und Li ist.

6. Verfahren nach Anspruch 4, **dadurch gekennzeichnet, dass** bei der kinematischen Verfolgung die Koordinaten X, Y, Z eines Punkts durch folgende Berechnung bestimmt werden:

$$X = (1{,}65XLI\text{-}XL2)/0{,}65$$

$$Y = (1{,}65YLI\text{-}YL2)/0{,}65$$

$$Z = (1{,}65ZLI\text{-}ZL2)/0{,}65$$

wobei XL1, YL1, ZL1 und XL2, YL2, ZL2 die Koordinaten sind, die den auf den Frequenzen L1 und L2 durchgeführten Phasenmessungen entsprechen.

**Claims**

1. Method for locating points on the surface of the Earth in which radiofrequency signals sent on two frequencies towards the Earth by a satellite constellation are captured simultaneously in a reference station of known coordinates and on a mobile that is moved over the points to be located, and an initialization process to eliminate the ambiguity of the phase on the signals from the various observed satellites, and a kinematic process which is used, on completion of the initialization process, to track the phase rotations of the signals while the mobile is moving, are implemented, **characterized in that** the initialization process implements a determination of point coordinates from phase measurements, applied to linear combinations of the transmission frequencies corresponding to two apparent frequencies with wavelengths longer than those of the transmission frequencies from the satellite constellation and **in that** the positions derived from the elimination of ambiguities carried out at each of these two apparent frequencies are linearly combined so that their noises are cancelled out.

2. GPS radio location method according to Claim 1, **characterized in that** the phase measurements are carried out at the frequencies L4=4L2-3L1 and L5=4L1-5L2, where L1 and L2 are the two GPS transmission frequencies, and **in that** the non-noise-affected X, Y, Z coordinates of a point are calculated by:

$$X = (1.43\ XL4 + XL5)/2.43$$

$$Y = (1.43\ YL4 + YL5)/2.43$$

$$Z = (1.43\ ZL4 + ZL5)/2.43$$

where XL4, YL4, ZL4 and XL5, YL5, ZL5 are the coordinates determined for this point from the phase measurements at the frequencies L4 and L5.

3. Method according to one of the preceding claims, **characterized in that**, in the initialization process or in the kinematic process, a position validity test is implemented which makes a comparison between, on the one hand, the trend of the phases measured between a time t0 corresponding to the start of the process and the current time t1 and, on the other hand, the trend of the theoretical mobile-satellite distances calculated between these same times from the point to be validated.

4. Method according to one of the preceding claims, **characterized in that**, in the initialization process and in the kinematic process, an ionospheric delay correction process applied to the calculated positions is implemented.

5. Method according to Claim 4, **characterized in that** residual errors ResLi, ResLj are calculated on phase measurements at two frequencies Li and Lj and **in that** a compound residual error is also calculated:

$$Res = (\lambda*ResLi-ResLj)/(\lambda-1)$$

where $\lambda$ is the ratio of the ionospheric delays between the frequencies Lj and Li.

6. Method according to Claim 4, **characterized in that**, in the kinematic tracking phase, the X, Y, Z coordinates of a point are determined by calculating:

$$X = (1.65XL1-XL2)/0.65$$

$$Y = (1.65YL1-YL2)/0.65$$

$$Z = (1.65ZL1-ZL2)/0.65$$

where XL1, YL1, ZL1 and XL2, YL2, ZL2 are the coordinates corresponding to the phase measurements carried out at the frequencies L1 and L2.

CONSTELLATION G P S

_1_  →  _U_

2

3

3

4

5

2a

FIG.1

RECEPTION
DES SIGNAUX GPS
MOBILE / STATION

7

OUI    INFOS
SUFFISANTES ?    NON    MESSAGE

6

8

DETERMINATION
D'UNE
SOLUTION APPROCHEE

10

RECALAGE

11

12

TESTS
DE :
VALIDITE

CONTROLE
RESIDUS    13

EVOLUTION
DE PHASE    14

VALIDATION

FIG.2

15

TRAITEMENT
CINEMATIQUE    9